# EUROPEAN PATENT APPLICATION

(11) **EP 4 755 722 A1**
(43) Date of publication of application: **10.06.2026**
(21) Application number: 25202014.4
(22) Date of filing: 12.09.2025
(51) Int. Cl.: B60R 13/00, B60R 19/48

(54) **VEHICLE EXTERIOR STRUCTURE**

(30) Priority: 06.12.2024 JP 2024213780
(71) Applicant: Suzuki Motor Corporation, Shizuoka 432-8611 (JP)
(72) Inventor: ARIMITSU, Kaishi, Hamamatsu-shi, 432-8611 (JP)
(74) Representative: Haseltine Lake Kempner LLP

(57) **Abstract**

[Problem to be Solved] To reduce rattling of a design member attached to an exterior member by locking.

[Solution] A vehicle exterior structure 10 includes: an exterior member 1 that is disposed to face an outside of a vehicle; and a design member 2 that is attached to the exterior member 1 on the outside of the vehicle. The design member 2 includes a first member 3 that is joined to the exterior member 1 from the outside of the vehicle, and a second member 4 that is locked to the exterior member 1 from the outside of the vehicle. The first member 3 has an overlapping portion 3a that is disposed to overlap with a portion of the second member 4 from the outside of the vehicle.

## Description

### [Technical Field]

The present invention relates to vehicle exterior structures.

### [Background Art]

A design member attached to an exterior panel of a vehicle is fixed to the exterior panel by a way of such as fastening with fastening members or locking with claws. For example, Patent Document 1 discloses a decorative panel attachment structure for attaching a decorative panel to a hood by engaging claw pieces formed on the back surface of the decorative panel with engaging holes formed on the hood.

### [Citation List]

### [Patent Document]

[Patent Literature 1] JP 2016-060448 A

### [Summary of Invention]

### [Problem to be Solved by the Invention]

In some cases, it may be difficult to use fastening members to attach a design member to an exterior panel. For example, if a seating surface is formed to fasten fastening members on the back side of a small, long, and thin design member, a sink mark can be easily formed on the front surface, which is the design surface, of the design member. This could make it difficult to form a seating surface on such a design member. In addition, for example, when a design member should allow detection waves of a sensor device, such as a radar, to pass through the design member, because the detection waves need to be uniformly transmitted, it may be difficult to form a seating surface on the design member. In such cases, a design member is attached to the exterior panel by locking, without using fastening members.

If a design member is attached to an exterior panel by locking without using fastening members, in one case, a slight gap may be formed between a locking claw and the peripheral edge of a locking hole. In another case, the periphery of a locking claw or the periphery of a locking hole may be elastically deformed. In these cases, the design member may be displaced with respect to the exterior panel, causing rattling, vibrations, etc. Even in the case of a design member that is locked to an exterior panel and joined to the exterior panel by fastening or another way, rattling or vibrations could still occur if the joining location, such as the fastening location, and the locking location are separate from each other, or if the design member has a weak part between the joining location and the locking location.

An object of the present invention is to provide a vehicle exterior structure that can reduce rattling of a design member attached to an exterior member by locking.

### [Means for Solving the Problem]

A mode of the present invention is a vehicle exterior structure including: an exterior member that is disposed to face an outside of the vehicle; and a design member that is attached to the exterior member on an outside of the vehicle. In the vehicle exterior structure, the design member includes a first member that is joined to the exterior member from the outside of the vehicle, and a second member that is locked to the exterior member from the outside of the vehicle. The first member has an overlapping portion that is disposed to overlap with a portion of the second member from the outside of the vehicle.

### [Advantageous Effect of the Invention]

According to the one aspect of the present invention, a vehicle exterior structure that can reduce rattling of a design member attached to an exterior member by locking can be provided.

### [Brief Description of Drawings]

[Figure 1] Figure 1 is an exploded perspective view of a vehicle exterior structure and a sensor support member according to an embodiment of the present invention.
[Figure 2] Figure 2 is a partial front view of the vehicle exterior structure as viewed from the front of the vehicle.
[Figure 3] Figure 3 is a partial front view of an exterior member as viewed from the front of the vehicle.
[Figure 4] Figure 4 is a partial perspective view of a first member and second members as viewed from the rear of the vehicle.
[Figure 5] Figure 5 is a perspective view of the exterior structure as viewed from the rear of the vehicle.
[Figure 6] Figure 6 is a back view of the first member as viewed from the rear of the vehicle.
[Figure 7] Figure 7 is a perspective sectional view of the vehicle exterior structure, taken along line A-A in Figure 2.
[Figure 8] Figure 8 is a front view of the second members according to a modification as viewed from the front of the vehicle.
[Figure 9] Figure 9 is a partial back view of the vehicle exterior structure as viewed from the rear of the vehicle.
[Figure 10] Figure 10 is an enlarged view of a region B in Figure 3.
[Figure 11] Figure 11 is a schematic sectional view of the exterior member and the first member.
[Figure 12] Figure 12 is a front view of an emblem and an emblem support part according to a modification.

### [Mode for Carrying Out the Invention]

Hereinafter, an embodiment of the present invention will be described in detail with reference to the drawings. In the drawings, an arrow Fr indicates the front direction of a vehicle along the vehicle front-rear direction. An arrow L indicates the left direction of the vehicle along the vehicle-width direction when the vehicle is viewed from the rear direction to the front direction. An arrow U indicates the upper direction of the vehicle along the vertical direction of the vehicle (hereinafter, referred to as "vertical direction"). In the following description, terms "front" and "rear" correspond to the front direction and the rear direction along the front-rear of the vehicle, respectively. Terms "upper" and "lower" correspond to the upper direction and the lower direction along the vertical direction of the vehicle, respectively. Furthermore, terms "right" and "left" correspond to the right direction and the left direction along the vehicle-width direction, respectively, when the vehicle is viewed from the rear of the vehicle toward the front of the vehicle.

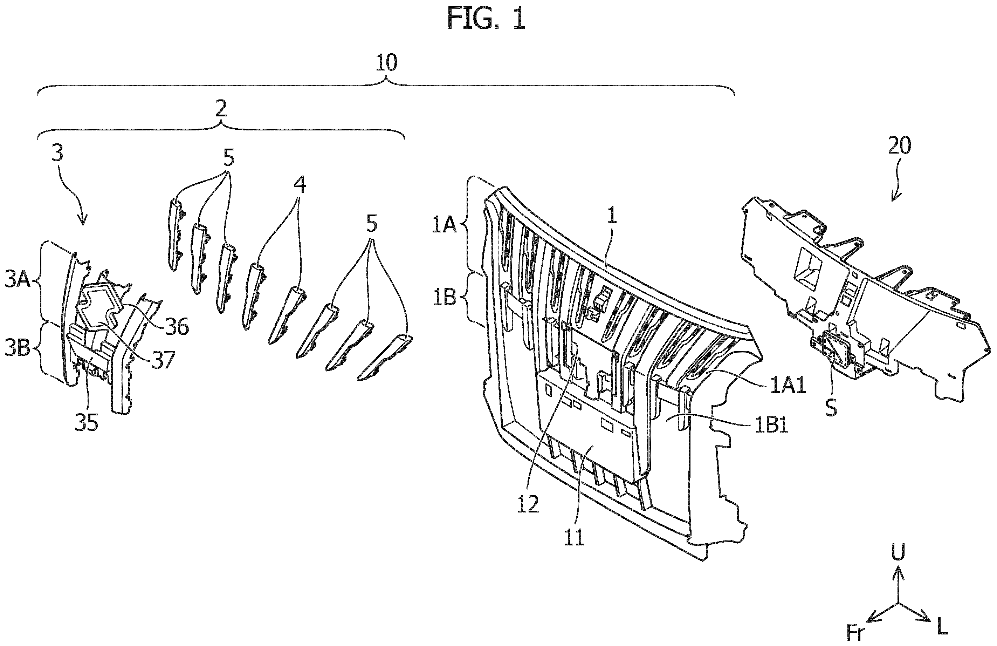

As illustrated in Figure 1, an exterior structure 10 according to the present embodiment is applied to the front section of a vehicle such as an automobile. The exterior structure 10 includes an exterior member 1, and a design member 2 that is attached to the exterior member 1 on the front side of the vehicle (outside of the vehicle). The exterior member 1 and the design member 2 constitute a design surface on the front section of the vehicle. In the present example, the front side of the vehicle corresponds to the "outside of the vehicle" according to the present invention, and the front of the vehicle corresponds to the "outside of the vehicle" according to the present invention.

A sensor support member 20 that supports a sensor device S for sensing the environment outside the vehicle, and a high-rigidity vehicle body structure member (not illustrated) that constitutes a framework of the vehicle are disposed on the front section of the vehicle. The sensor support member 20 is fixed to the vehicle body structure member and is connected to the exterior member 1 from the rear side of the vehicle. In this way, the exterior structure 10 (1, 2) is supported by the vehicle body structure member via the sensor support member 20.

The sensor device S is, for example, a millimeter-wave radar that uses an electromagnetic wave in the millimeter-wave band as a detection wave, and transmits (emits) and receives (senses) the detection wave. A detection wave transmitted from the sensor device S passes through a sensor opening 12 of the exterior member 1 and a detection wave passage portion 35 of a first member 3, which will be described below, and is emitted to the front of the vehicle. When there is an obstacle in front of the vehicle, the detection wave is reflected by the obstacle, passes through (or goes through) the detection wave passage portion 35 and the sensor opening 12, and is received and sensed by the sensor device S.

The sensor device S is not limited to a millimeter-wave radar. Examples of the sensor device S include: a sonic sensor (an ultrasonic sensor/sonar) using a sonic wave as a detection wave; and a camera (an imaging device) using an electromagnetic wave in the visible light band or an electromagnetic wave in the infrared band as a detection wave. In this case, the detection wave passage portion 35 may have a through hole (or an opening). The detection wave may be sunlight or may be transmitted from a detection wave transmission device provided separately from the sensor device S. In this case, the sensor device S does not need to transmit the detection wave.

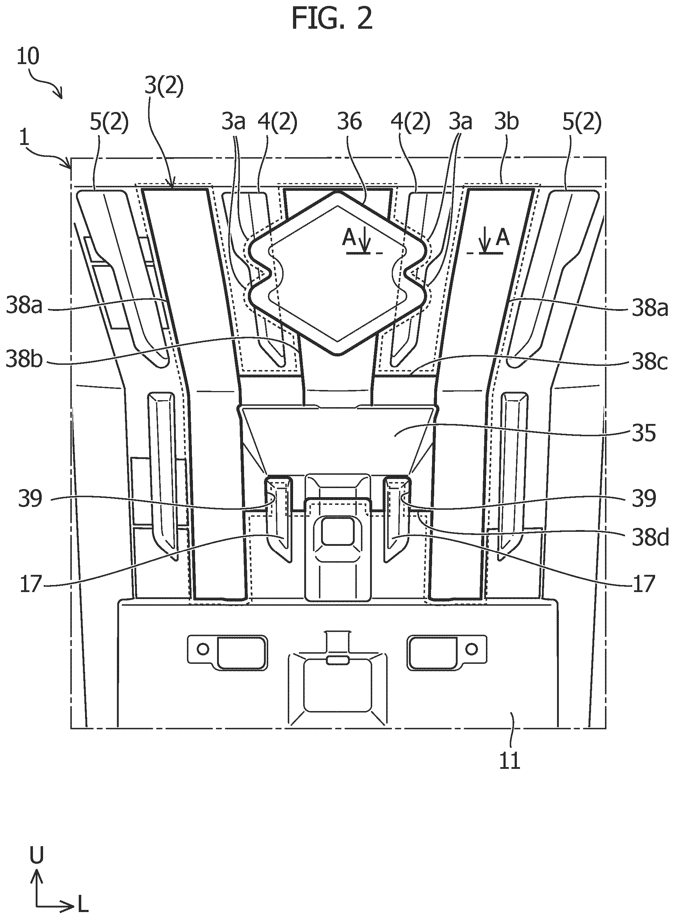

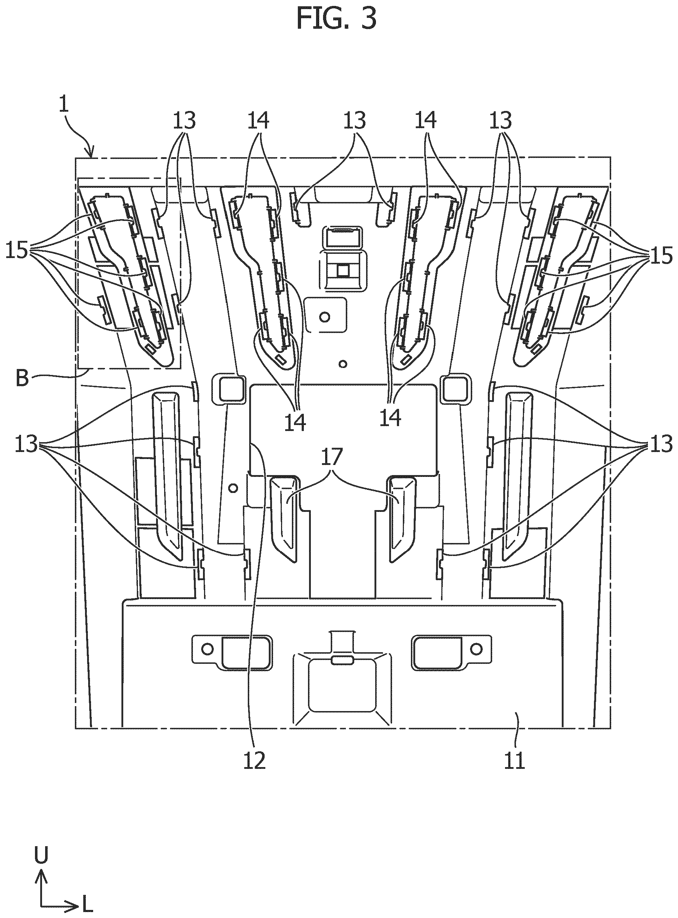

As illustrated in Figures 1 to 3, the exterior member 1 is a resin member extending in the vertical direction and the width direction perpendicular to the vertical direction, and is disposed to face the front direction of the vehicle (outside of the vehicle). Figure 2 is a front view of the exterior member 1 to which the design member 2 (3, 4, 5) is attached, and Figure 3 is a front view of the exterior member 1 from which the design member 2 (3, 4, 5) is detached. In the present embodiment, the width direction of the exterior structure 10 matches the vehicle-width direction. Therefore, in the following description, the width direction of the exterior member 1 will also be referred to as the vehicle-width direction. In the illustrated example, the exterior member 1 is a large grille having a plurality of vent holes penetrating therethrough in the vehicle front-rear direction. A plate support part 11 to which a number plate (a license plate) is attached is provided at a central part in the vehicle-width direction and a middle part in the vertical direction of the exterior member 1. The sensor opening 12 through which the detection wave passes is formed above the plate support part 11 of the exterior member 1.

As illustrated in Figures 1 and 2, the design member 2 includes a first member 3 joined to the exterior member 1 from the front of the vehicle (from the outside of the vehicle). The design member 2 also includes second members 4 and third members 5 that are individually locked to the exterior member 1 from the front of the vehicle (from the outside of the vehicle). In the example in Figure 1, the design member 2 includes two second members 4 and six third members 5 spaced apart from each other and aligned in the vehicle-width direction.

The first member 3 is a member larger than any one of the small second members 4 and the third members 5, and is a resin molded product, which has been manufactured by injection molding or the like. As illustrated in Figure 2, the first member 3 is disposed in a central part of the exterior member 1 in the vehicle-width direction and above the plate support part 11, and is attached to the exterior member 1 at least by joining.

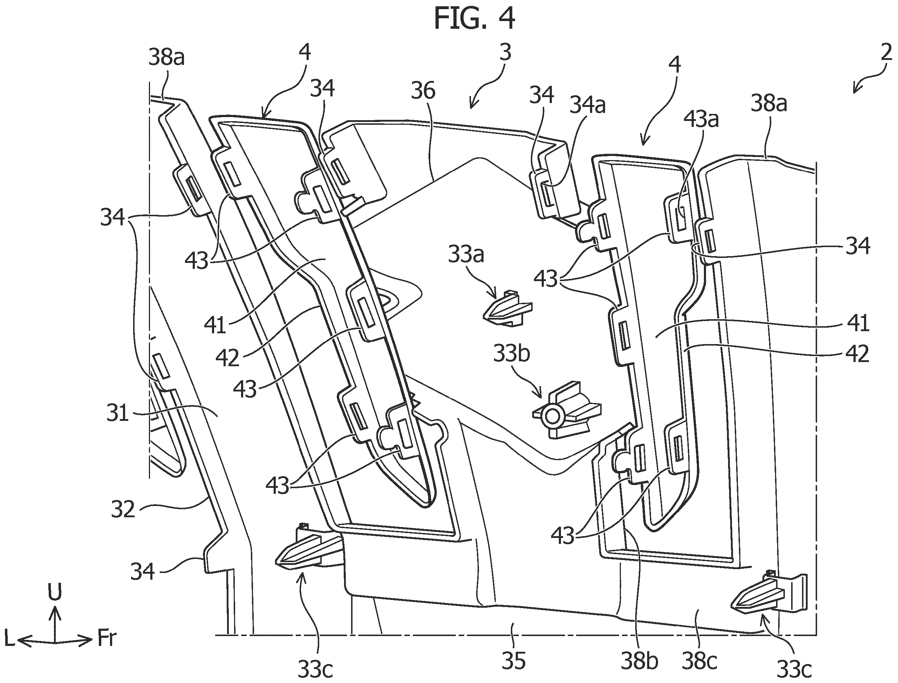

Specifically, as illustrated in Figures 4 to 6, the first member 3 includes: a front wall 31 extending in the vertical direction and the vehicle-width direction and facing the front of the vehicle; a peripheral wall 32 extending along the peripheral edge of the front wall 31 and protruding in the rear direction of the vehicle; and a plurality of joining portions (33a, 33b) provided on the front wall 31 and individually joined to the exterior member 1. Furthermore, the first member 3 has a plurality of joining portions (33c) joined to at least one of the exterior member 1 and the sensor support member 20. In the present specification, "joining" includes fastening with a fastening member such as a bolt or a clip, welding, and fitting. The first member 3 is more firmly attached (fixed) to the exterior member 1 by joining than the individual second members 4 attached to the exterior member 1 only by locking.

In the illustrated example, the first member 3 further includes a plurality of first locked portions 34 that are provided on the peripheral wall 32 and that are individually locked to the exterior member 1. The each of the plurality of first locked portions 34 is spaced apart from the others and is arranged in the extension direction of the peripheral wall 32. The exterior member 1 has a plurality of first locking portions 13 at its locations corresponding to the plurality of first locked portions 34, and the plurality of first locking portions 13 lock their respective first locked portions 34. Thus, the first member 3 is attached to the exterior member 1 not only by joining, but also locking.

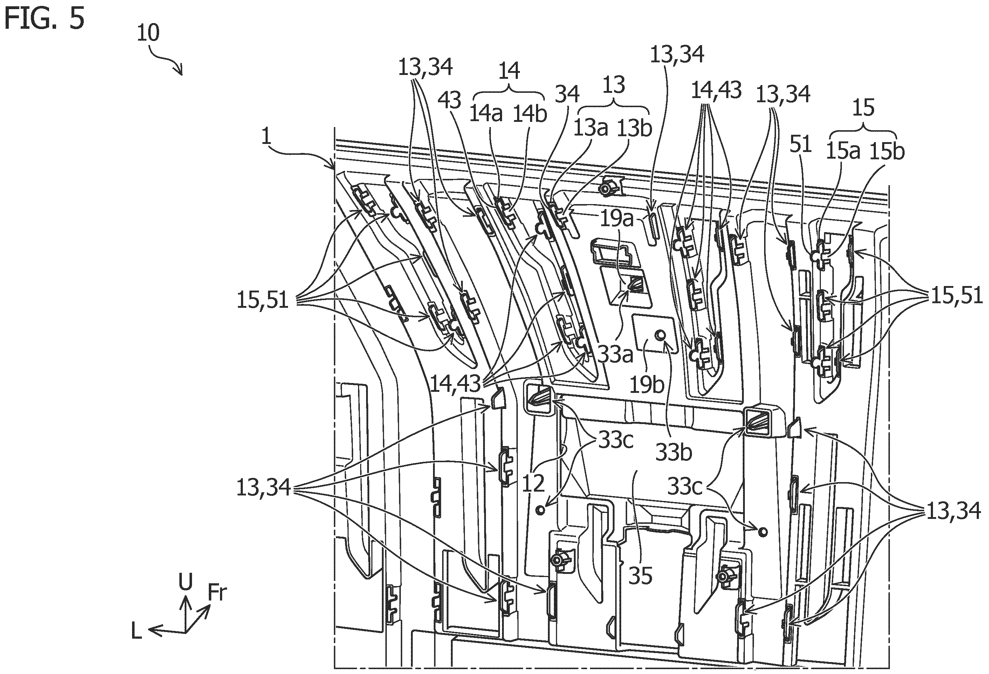

Specifically, as illustrated in Figure 4, each first locked portion 34 is a rectangular flat plate-shaped protrusion extending from a rear end of the peripheral wall 32 toward the exterior member 1. Each first locked portion 34 has a locking hole 34a penetrating it in its thickness direction. As illustrated in Figure 5, each first locking portion 13 has an insertion hole 13a, which penetrates the first locking portion 13 in the vehicle front-rear direction and into which a first locked portion 34 is inserted from the front of the vehicle. Furthermore, each first locking portion 13 is provided with a locking claw 13b, which is inserted in the thickness direction into a locking hole 34a formed in its corresponding first locked portion 34 inserted into its corresponding insertion hole 13a. By inserting these locking claws 13b into their respective locking holes 34a, these first locking portions 13 lock their respective first locked portions 34.

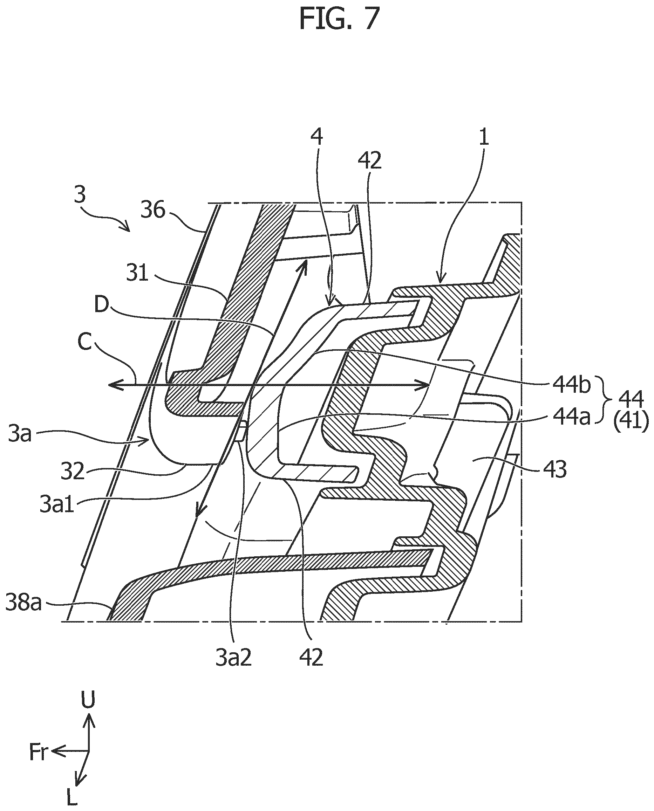

In the present embodiment, the first member 3 includes the detection wave passage portion 35, an emblem support part 36 disposed above the detection wave passage portion 35, and an emblem 37 attached to the emblem support part 36. The emblem 37 is formed as a member, which is different from the main body of the first member 3, which includes the front wall 31, the peripheral wall 32, the plurality of joining portions (33a, 33b, 33c), the plurality of first locked portions 34, the detection wave passage portion 35, and the emblem support part 36. In Figures 2 and 7, the emblem 37 is not illustrated. The main body further includes first vertical portions 38a that extend in the vertical direction and are disposed on both the right and left sides of the detection wave passage portion 35 and the emblem support part 36 in the vehicle-width direction. The main body also further includes a second vertical portion 38b, an upper horizontal portion 38c and a lower horizontal portion 38d that connect the detection wave passage portion 35 and the emblem support part 36 to the first vertical portions 38a on the right and left sides.

The detection wave passage portion 35 is a thin plate-shaped part that approximately faces the front direction of the vehicle, and is made of a material having characteristics that can transmit the detection wave. For example, the detection wave passage portion 35 is made of a synthetic resin or the like. The detection wave passage portion 35 faces the sensor device S supported by the sensor support member 20 in the vehicle front-rear direction through the sensor opening 12. The emblem 37 is attached to the emblem support part 36 from the front of the vehicle. In this way, the rigidity of the emblem support part 36 and its periphery increases. The emblem support part 36 is provided with the first joining portion 33a and the second joining portion 33b, and thus, the support rigidity of the emblem support part 36 by the exterior member 1 is increased.

Each of the right and left first vertical portions 38a is disposed to be spaced apart from the emblem support part 36 in the vehicle-width direction, and to extend from the upper edge of the exterior member 1 to the plate support part 11 beyond the detection wave passage portion 35. The second vertical portion 38b extends upward from the upper end of the emblem support part 36 and extends downward from the lower end of the emblem support part 36. The upper horizontal portion 38c and the lower horizontal portion 38d extend in the vehicle-width direction along the upper edge and the lower edge of the detection wave passage portion 35, respectively, and are connected to the right and left first vertical portions 38a. The lower ends of the second vertical portions 38b are connected to the upper horizontal portion 38c. The first locked portions 34 are formed on the first vertical portions 38a and the second vertical portion 38b.

The second members 4 and the third members 5 are spaced apart from each other and are aligned in the vehicle-width direction at the upper part of the exterior member 1. The left second member 4 is disposed between the emblem support part 36 and the left first vertical portion 38a, and the right second member 4 is disposed between the emblem support part 36 and the right first vertical portion 38a. Three third members 5 are disposed on each of the right and left sides of the first member 3. The second members 4 and the third members 5 are relatively small members each having a long and thin shape in the vertical direction, and are resin molded products. These second members 4 and third members 5 could easily form sink marks on their front surfaces, which are the design surfaces. Thus, the second members 4 and the third members 5 are attached to the exterior member 1 only by locking without using fastening members such as bolts.

Specifically, as illustrated in Figure 4, each second member 4 includes a front wall 41 extending in the vertical direction and the vehicle-width direction and facing the front of the vehicle, a peripheral wall 42 extending along the peripheral edge of the front wall 41 and protruding toward the rear of the vehicle, and a plurality of second locked portions 43 provided on the peripheral wall 42 and individually locked to the exterior member 1.

The plurality of second locked portions 43 are spaced apart from each other and arranged in the extension direction of the peripheral wall 42. Each second locked portion 43 is a rectangular flat plate-shaped protrusion protruding from a rear end of the peripheral wall 42 toward the exterior member 1, and has a locking hole 43a penetrating it in its thickness direction. As illustrated in Figure 5, the exterior member 1 has a plurality of second locking portions 14 at its locations corresponding to the plurality of second locked portions 43, and the plurality of second locking portions 14 lock their respective second locked portions 43. Each second locking portion 14 has an insertion hole 14a penetrating the second locking portion 14 in the vehicle front-rear direction. Each second locked portion 43 is inserted into its corresponding insertion hole 14a from the front of the vehicle. Furthermore, each second locking portion 14 has a locking claw 14b inserted, in the thickness direction, into the locking hole 43a of its corresponding second locked portion 43 inserted into its corresponding insertion hole 14a. By inserting each locking claw 14b into its corresponding locking hole 43a, each second locking portion 14 locks its corresponding second locked portion 43.

The third members 5 have a structure similar to that of the second members 4. That is, each third member 5 includes a front wall, a peripheral wall, and a plurality of third locked portions 51, which have a structure similar to that of the front wall 41, the peripheral wall 42, and the second locked portions 43. As illustrated in Figure 5, the exterior member 1 has a plurality of third locking portions 15 for locking the third locked portions 51 at its locations corresponding to the plurality of third locked portions 51. The third locked portions 51 have a structure similar to that of the first locked portions 34 and the second locked portions 43 described above. Each third locked portion 51 has a locking hole 51a. The third locking portions 15 have a structure similar to that of the first locking portions 13 and the second locking portions 14 described above. Each third locking portions 15 has an insertion hole 15a and a locking claw 15b. Each third locked portion 51 is inserted into its corresponding insertion hole 15a from the front of the vehicle, and each locking claw 15b is inserted into its corresponding locking hole 51a.

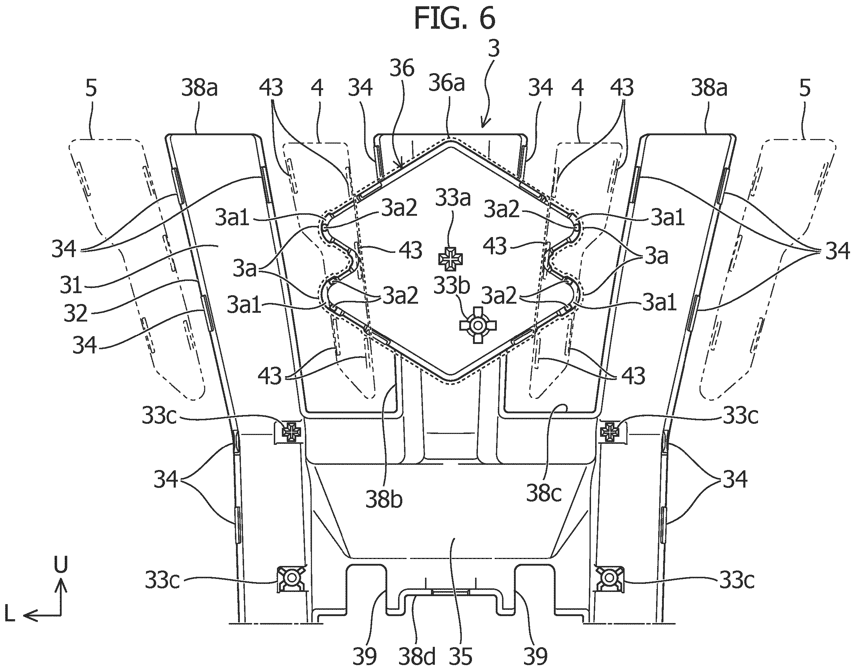

As illustrated in Figures 2 and 6, in the present embodiment, the first member 3 has overlapping portions 3a that are disposed to overlap with portions of the second members 4 from the front of the vehicle (the outside of the vehicle). The first member 3 includes the overlapping portions 3a and a non-overlapping portion 3b that does not overlap with the second members 4. The non-overlapping portion 3b is a portion other than the overlapping portions 3a of the first member 3. In Figure 6, the second members 4 and the third members 5 are indicated by dot-dashed lines, so as to clarify the positional relationship between the first member 3, the second members 4, and the third members 5.

In the illustrated example, two ends of the emblem support part 36, which is located between the two second members 4, form the overlapping portions 3a. Specifically, the emblem support part 36 has an outer shape obtained by vertically connecting two rhombuses, which are long in the vehicle-width direction, such that the two rhombuses partially overlap with each other. The emblem support part 36 has two approximately triangular left-end parts vertically aligned on its left side, and each of these two left-end parts forms an overlapping portion 3a disposed to overlap with a portion of the left second member 4. Furthermore, the emblem support part 36 has two approximately triangular right-end parts vertically aligned on its right side, and each of these two right-end parts forms an overlapping portion 3a disposed to overlap with a portion of the right second member 4.

As described above, the second members 4 are attached to the exterior member 1 only by locking. If a gap is generated between a second locked portion 43 and the peripheral edge of its corresponding insertion hole 14a due to manufacturing tolerances of the exterior member 1 and the second members 4, or if the periphery of a second locked portion 43 elastically deforms, for example, this second member 4 is easily displaced with respect to the exterior member 1. According to the present embodiment, the overlapping portions 3a of the first member 3 joined to the exterior member 1 are disposed to overlap with portions of the second members 4 from the front of the vehicle (outside of the vehicle). These overlapping portions 3a can restrict displacement of the second members 4, and can reduce rattling of the second members 4 with respect to the exterior member 1. In addition, since two vertically aligned overlapping portions 3a are disposed to overlap with a corresponding one of the vertically long second members 4, rattling of the long and thin second members 4 can be reduced more effectively. As described above, the exterior structure 10 according to the present embodiment can reduce rattling of the design member 2 (specifically, the second members 4) attached to the exterior member 1 by locking.

According to the present embodiment, each of the plurality of (in the present embodiment, four) overlapping portions 3a is provided on the outer side of the non-overlapping portion 3b. In this way, the area of the first member 3 included in the design member 2 is increased, and the surface rigidity of the individual overlapping portions 3a can be increased. In addition, the four overlapping portions 3a are provided at the two ends of the emblem support part 36 in the vehicle-width direction, and the emblem 37 is attached to the portion (36a) between the right and left overlapping portions 3a of the emblem support part 36. Thus, the surface rigidity of the portion (36a) is increased. As a result, because the rigidity of the overlapping portions 3a and the periphery thereof increases, rattling of the second members 4 can be reduced more reliably. Furthermore, because the rigidity of each overlapping portion 3a is also increased by the attachment of the emblem 37, rattling of the second members 4 can be reduced even more reliably by each overlapping portion 3a.

In the present embodiment, the overlapping portions 3a may be disposed to come into contact with their respective second members 4 without any gap therebetween, or may be disposed with a gap from their respective second members 4, the gap having a size that reduces displacement of their respective second members 4.

Next, the exterior structure 10 will be described in detail. As illustrated in Figures. 6 and 7, in the present embodiment, each overlapping portion 3a includes a protruding edge portion 3a1 that is provided along its peripheral edge and protrudes toward its corresponding second member 4. Each overlapping portion 3a also includes at least one contact portion 3a2 that is provided at its protruding edge portion 3a1, protrudes toward its corresponding second member 4, and comes into contact with this second member 4 from the front of the vehicle. Each protruding edge portion 3a1 is provided on at least a portion of the peripheral edge (specifically, on the peripheral wall 32) of its corresponding overlapping portion 3a in the extension direction, and protrudes from the rear surface of the peripheral wall 32. Each contact portion 3a2 protrudes from the rear surface of its corresponding protruding edge portion 3a1. In the present embodiment, each contact portion 3a2 corresponds to an "overlapping-portion-side contact portion" according to the present invention.

In the illustrated example, each protruding edge portion 3a1 has an approximately C-shape in a plan view as viewed from the rear of the vehicle, has a uniform thickness, and extends in the extension direction of the peripheral wall 32. Each of the upper overlapping portions 3a has one contact portion 3a2, and each of the lower overlapping portions 3a has two contact portions 3a2 spaced apart from each other. Each contact portion 3a2 is a thin cylindrical or prismatic protrusion, and the rear end surface of each contact portion 3a2 comes into contact with the front surface of its corresponding second member 4. The shape of each contact portion 3a2 is not limited to a columnar shape and may be another shape, for example, a wall shape extending along an edge of the second member 4.

Regarding the first member 3 and the second members 4, which are resin molded products, the wall thickness and the plating coating film thickness may vary due to, for example, manufacturing tolerances. In addition, distortion of the front surface and the rear surface may occur due to, for example, flow of resin or curing time at the time of molding. Therefore, if the contact area between an overlapping portion 3a and its corresponding second member 4 is large, the contact location and the contact range where the overlapping portion 3a comes into contact with the second member 4 may be displaced from the desired location and range, and slight rattling could occur.

According to the present embodiment, each overlapping portion 3a has at least one contact portion 3a2 that protrudes toward and comes into contact with its corresponding second member 4. Each overlapping portion 3a is in contact with a corresponding second member 4 via the rear end of its at least one contact portion 3a2. A portion of each overlapping portion 3a, the portion being other than its at least one contact portion 3a2, is disposed to be spaced apart from its corresponding second member 4 in the front direction of the vehicle. As described above, the contact area between each overlapping portion 3a and its corresponding second member 4 is reduced by allowing only the at least one contact portion 3a2 of each overlapping portion 3a to come into contact with its corresponding second member 4. As a result, even slight rattling of the second members 4 due to, for example, manufacturing tolerances of the second members 4 and the first member 3 can be reduced.

Furthermore, according to the present embodiment, each contact portion 3a2 is provided on the peripheral edge (the peripheral wall 32) of the first member 3 via a protruding edge portion 3a1 having a uniform thickness. In this way, it becomes possible to prevent generation of sink marks on the design surface (the front surface) of the first member 3 due to provision of the contact portions 3a2. As a result, the first member 3 having an excellent aesthetic appearance can be provided.

As illustrated in Figure 6, it is preferable that the contact portions 3a2 be disposed at locations separate from the joining portions (33a, 33b) of the emblem support part 36. In the illustrated example, each contact portion 3a2 is disposed at an outer edge of an overlapping portion 3a in the vehicle-width direction. A portion of each overlapping portion 3a, the portion being separate from the joining portions (33a, 33b), is more likely to be deformed, compared with a portion of each overlapping portion 3a, the portion being closer to the joining portions (33a, 33b). By disposing each contact portion 3a2 at a portion of the corresponding overlapping portion 3a, the portion being separate from the joining portions (33a, 33b), rattling of the overlapping portions 3a can be reduced.

In the illustrated example, the first joining portion 33a is disposed in the center of the emblem support part 36, and the second joining portion 33b is disposed below the center of the emblem support part 36. Contact portions 3a2 are disposed on both sides of the first joining portion 33a in the vehicle-width direction. Furthermore, the middle part in the vertical direction between the edges of two vertically adjacent overlapping portions 3a is a concave portion that is concave toward the inside in the vehicle-width direction (in the illustrated example, the portion between an upper protruding edge portion 3a1 and a lower protruding edge portion 3a1). Because the peripheral wall 32 is extended at each concave portion and the periphery thereof, the rigidity is increased. In addition, since a contact portion 3a2 is disposed on the concave-part side of an edge, the rigidity of the periphery of the contact portion 3a2 is increased. Furthermore, since each contact portion 3a2 is disposed between the first joining portion 33a or the second joining portion 33b and a third joining portion 33c at the upper horizontal portion 38c in the vehicle-width direction or the vertical direction, displacement of each contact portion 3a2 is reduced. In this way, rattling of the second members 4 can be reduced more reliably. It is preferable that the contact portions 3a2 of the lower overlapping portions 3a be disposed between the first joining portion 33a and the second joining portion 33b in the vertical direction.

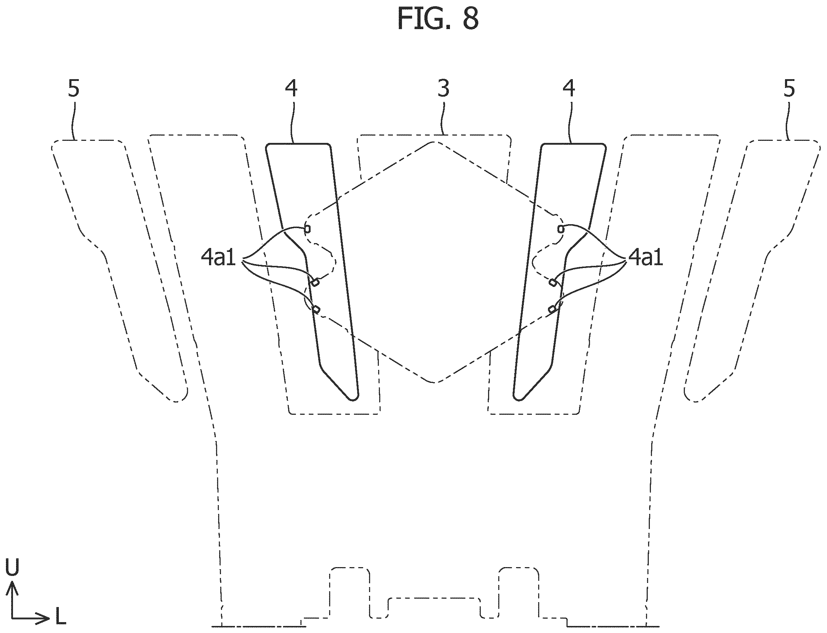

The overlapping portions 3a have the contact portions 3a2 in the present embodiment. However, instead of or in addition to these contact portions 3a2, as illustrated in Figure 8, the second members 4 may have contact portions 4a1 that protrude toward their respective overlapping portions 3a and come into contact with their respective overlapping portions 3a from the rear of the vehicle. The contact portions 4a1 are located on portions of the second members 4, the portions where the overlapping portions 3a are disposed to overlap from the front of the vehicle. As with the contact portions 3a2, each of the contact portions 4a1 may have a columnar shape or a wall shape. As with the contact portions 3a2, it is preferable that each of the contact portions 4a1 be disposed at a location farther separate from the joining portions (33a, 33b) of the emblem support part 36. By allowing each overlapping portion 3a to come into contact with its corresponding second member 4 only a contact portion 4a1, the contact area between each overlapping portion 3a and its corresponding a second member 4 is reduced. Thus, even slight rattling of the second members 4 with respect to the exterior member 1 can be reduced. In the present embodiment, each contact portion 4a1 corresponds to a "second-member-side contact portion" according to the present invention.

As illustrated in Figure 7, in the present embodiment, a portion of each second member 4, the portion that an overlapping portion 3a is disposed to overlap with, has an inclined wall 44, and corresponding contact portions 3a2 come into contact with the inclined wall 44. In a plan view as viewed from one side in the vertical direction, each inclined wall 44 is inclined with respect to a perpendicular direction D perpendicular to a direction C in which the second member 4 is locked to the exterior member 1. The locking direction C is a direction in which the second locked portions 43 are inserted into the insertion holes 14a in their respective second locking portions 14. In other words, the locking direction C is a direction in which the exterior member 1 and the second members 4 overlap with each other at their respective locations of the exterior member 1, and the locking direction C is also the thickness direction of the exterior member 1 at these locations of the exterior member 1. In the illustrated example, in a plan view as viewed from one side in the vertical direction of the vehicle, the exterior member 1 is gently curved to form a convex shape in the front direction of the vehicle. As described below, the upper part (1A) of the exterior member 1 is inclined in the rear direction of the vehicle as the upper part extends upward (see Figure 1). Therefore, the locking direction C is the vehicle front-rear direction or approximately the vehicle front-rear direction, and the perpendicular direction D is the vehicle-width direction or approximately the vehicle-width direction.

In the illustrated example, the front wall 41 of each second member 4 has a cross-section having a mountain shape with a convex ridge facing the front of the vehicle (the outside of the vehicle) (or an approximately V-shape with a convex ridge facing the front of the vehicle), and extends in the vertical direction. Each front wall 41 as a whole forms an inclined wall 44. Each inclined wall 44 has a first inclined portion 44a, which is one half of the inclined wall 4 on the outer side in the vehicle-width direction, and a second inclined portion 44b, which is the other half of the inclined wall 44 on the inner side in the vehicle-width direction. The first inclined portion 44a is inclined in the rear direction of the vehicle as the first inclined portion 44a extends outward in the vehicle-width direction. The second inclined portion 44b is connected to the front end of the first inclined portion 44a and is inclined in the rear direction of the vehicle as the second inclined portion 44b extends inward in the vehicle-width direction. In the illustrated example, a contact portion 3a2 is disposed in front of the first inclined portion 44a, which is separate from the joining portions (33a, 33b) of the emblem support part 36, and comes into contact with the first inclined portion 44a.

According to this structure, each contact portion 3a2 comes into contact with its corresponding inclined wall 44 from the front of the vehicle in the locking direction C. In this way, rattling of the second members 4 can be reduced in both the locking direction C and the perpendicular direction D. To reduce the rattling more effectively, it is preferable that each contact portion 3a2 be disposed at a location closer to a bent portion, which is the boundary between its corresponding first inclined portion 44a and its corresponding second inclined portion 44b in the vehicle-width direction.

Furthermore, according to the present embodiment, the individual inclined wall 44 is formed in a mountain shape with a convex ridge facing the front of the vehicle. According to this structure, when the second members 4 come into contact with the first member 3, deformation of the second members 4, such as bending toward the inner side of the vehicle in the locking direction C, is reduced. In addition, stress is less likely to concentrate on the corner portion between the front wall 41 and the peripheral wall 42 of each second member 4, and therefore, deformation of the second members 4, such as collapsing in the width direction, is reduced. As a result, the rattling of the second members 4 including the inclined walls 44 can be reduced more effectively by the contact portions 3a2.

As illustrated in Figure 6, according to the present embodiment, each second member 4 has a plurality of second locked portions 43 disposed on both sides of a contact portion 3a2 in at least one of the vertical direction and the vehicle-width direction. In other words, each contact portion 3a2 is disposed between second locked portions 43 in at least one of the vertical direction and the vehicle-width direction.

In the illustrated example, three second locked portions 43 are aligned in the vertical direction along the inner edge of each second member 4 in the vehicle-width direction (hereinafter, simply referred to as the inner edge), and two second locked portions 43 are aligned in the vertical direction along the outer edge of each second member 4 in the vehicle-width direction (hereinafter, simply referred to as the outer edge). With regard to the contact portion 3a2 of each of the upper overlapping portions 3a, the two second locked portions 43 positioned on the upper side and in the middle of the inner edge and the second locked portion 43 positioned on the upper side of the outer edge are disposed on both sides of the contact portion 3a2 in the vehicle-width direction. Furthermore, the two second locked portions 43 positioned on the upper side of the inner edge and of the outer edge, and the second locked portion 43 positioned in the middle of the inner edge are disposed on both sides of the contact portion 3a2 in the vertical direction. With regard to the two contact portions 3a2 of each of the lower overlapping portions 3a, the two second locked portions 43 positioned in the middle and on the lower side of the inner edge and the second locked portion 43 positioned on the lower side of the outer edge are disposed on both sides of the two contact portions 3a2 in the vehicle-width direction. Furthermore, the second locked portion 43 positioned in the middle of the inner edge, and the two second locked portions 43 positioned on the lower side of the inner edge and of the outer edge are disposed on both sides of the two contact portions 3a2 in the vertical direction.

According to this arrangement of the contact portions 3a2 and the second locked portions 43, rattling of the peripheries of the second locked portions 43, each of which is located at one of the two sides of a contact portion 3a2, can be reduced more effectively by the contact portions 3a2. In the present embodiment, the two second locked portions 43 positioned on the upper side and in the middle of the inner edge and the second locked portions 43 positioned on the upper side of the outer edge, which are arranged around the contact portion 3a2 of an upper overlapping portion 3a, correspond to "a plurality of locked portions" according to the present invention. In addition, the two second locked portions 43 located in the middle and the lower side of the inner edge and the second locked portion 43 positioned on the lower side of the outer edge, which are arranged around the two contact portions 3a2 of a lower overlapping portion 3a, correspond to "a plurality of locked portions" according to the present invention.

As illustrated in Figure 6, according to the present embodiment, the first member 3 is joined to the exterior member 1 at the non-overlapping portion 3b. In other words, the non-overlapping portion 3b has a plurality of joining portions (33a, 33b) individually joined to the exterior member 1, and the overlapping portions 3a do not have any joining portions joined to the exterior member 1. The overlapping portions 3a extend from the non-overlapping portion 3b toward their respective second members 4, and are formed integrally with the non-overlapping portion 3b.

Specifically, the first joining portion 33a and the second joining portion 33b are provided in a main portion 36a of the emblem support part 36. The main portion 36a is a portion other than the four overlapping portions 3a, and constitutes part of the non-overlapping portion 3b. Each of the two overlapping portions 3a on the left extends from the left edge of the main portion 36a in the vehicle-width direction toward the left second member 4 and overlaps a portion of the left second member 4. Each of the two overlapping portions 3a on the right extends from the right edge of the main portion 36a in the vehicle-width direction toward the right second member 4 and overlaps a portion of the right second member 4. In the illustrated example, two third joining portions 33c are provided at each of the first vertical portions 38a constituting part of the non-overlapping portion 3b. Each third joining portion 33c can be joined at least to the exterior member 1.

According to this structure, in the assembly process of the exterior structure 10, after the second members 4 are locked and attached to the exterior member 1, the first member 3 is joined and attached to the exterior member 1 from the outside of the vehicle. As a result, the overlapping portions 3a overlap with their corresponding portions of the second members 4. In this way, the exterior structure 10 can be easily assembled. In addition, because the first member 3 is directly joined to the exterior member 1 without intervention of the second members 4, the joining strength of the first member 3 to the exterior member 1 can be increased.

Furthermore, in the present embodiment, each second member 4 is disposed between the main portion 36a of the emblem support part 36 and its corresponding one of the first vertical portions 38a, each of which constitutes part of the non-overlapping portion 3b. The main portion 36a is joined to the exterior member 1 by the first joining portion 33a and the second joining portion 33b, and the first vertical portions 38a are locked to the exterior member 1 by the first locked portions 34. Each overlapping portion 3a extends from the main portion 36a toward its corresponding one of the second members 4. In other words, the non-overlapping portion 3b includes a first portion (36a), which is joined to the exterior member 1, and second portions (38a), each of which is disposed to be spaced apart from the first portion (36a) and is locked to the exterior member 1. Each second member 4 is disposed between the first portion (36a) and a second portion (38a), and each overlapping portion 3a extends from the first portion (36a) toward its corresponding one of the second members 4.

According to this structure, the support rigidity of the first member 3 with respect to the exterior member 1 is increased around the second members 4. As a result, the effect of the overlapping portions 3a in reducing rattling of the second members 4 can be increased. In the present embodiment, the main portion 36a of the emblem support part 36 corresponds to the "first portion" according to the present invention, and each first vertical portion 38a corresponds to the "second portion" according to the present invention.

In the illustrated example, each first vertical portion 38a, which is the "second portion" according to the present invention, is attached to the exterior member 1 only by locking. However, each first vertical portion 38a may be attached to the exterior member 1 by joining, instead of locking or in addition to locking.

In the illustrated example, the first joining portion 33a is disposed in the center of the emblem support part 36, and the second joining portion 33b is disposed below the center of the emblem support part 36. The two lower overlapping portions 3a are disposed on both sides in a direction crossing a virtual line connecting the first joining portion 33a and the second joining portion 33b. According to this arrangement, the rigidity of the two lower overlapping portions 3a can be increased.

In addition, two third joining portions 33c are disposed on the right and left sides of the upper horizontal portion 38c, and the right and left first vertical portions 38a extend downward beyond these two third joining portions 33c. In this way, the support rigidity of the emblem support part 36 having the overlapping portions 3a can be increased, and rattling of the second members 4 can be reduced more reliably by the overlapping portions 3a.

In the present embodiment, the non-overlapping portion 3b includes the detection wave passage portion 35, and is joined to at least one of the exterior member 1 and the sensor support member 20 around the detection wave passage portion 35. Specifically, the non-overlapping portion 3b includes the above-described third joining portions 33c. The third joining portions 33c are disposed around the detection wave passage portion 35, and each of the third joining portions 33c is joined to at least one of the exterior member 1 and the sensor support member 20. In the illustrated example, the detection wave passage portion 35 has a quadrangular shape (in the illustrated example, an inverted trapezoidal shape) in a plan view as viewed from the front or rear of the vehicle, and four third joining portions 33c are disposed around four corners of the detection wave passage portion 35.

According to this structure, the support rigidity of the detection wave passage portion 35 is increased by the exterior member 1 and/or the sensor support member 20. Thus, displacement of the detection wave passage portion 35 caused by vibrations of the vehicle during running, etc., is reduced, and the relative positional relationship between the sensor device S and the detection wave passage portion 35 is maintained. As a result, a desired accuracy in sensing the external environment by the sensor device S can be maintained.

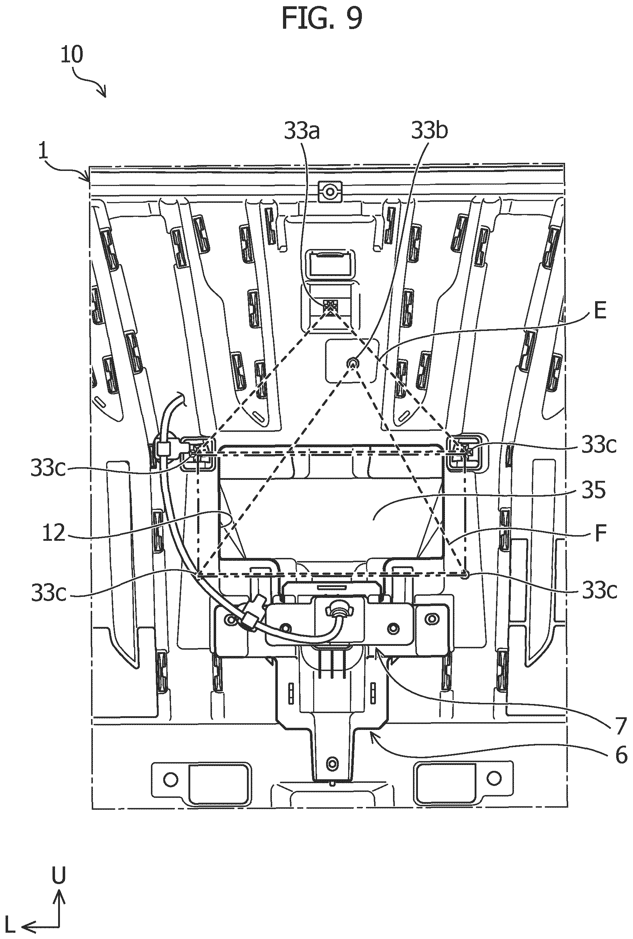

Figure 9 is a back view of the exterior member 1 to which the design member 2 (3, 4, 5) is attached, as viewed from the rear of the vehicle. Next, a suitable structure for the first joining portion 33a, the second joining portion 33b, and the third joining portions 33c will be described. In Figure 9, a cover member 6 for protecting a camera (not illustrated) is disposed below the sensor opening 12, and a bracket 7 for supporting the camera is attached to the cover member 6.

The first joining portion 33a is joined to the exterior member 1 by using a combination of a joining protrusion and a joining hole. Specifically, the first joining portion 33a has a joining protrusion protruding from the rear surface of the first member 3 in the rear direction of the vehicle. The illustrated joining protrusion has a plus-shaped (+) cross-section. The exterior member 1 has a joining hole penetrating the exterior member 1 in the vehicle front-rear direction at its location corresponding to the first joining portion 33a. The first joining portion 33a is joined to the exterior member 1 by inserting the joining protrusion into the joining hole from the front of the vehicle. In the illustrated example, the exterior member 1 has a convex portion 19a (see Figure 5) having a convex ridge facing the outside (the front direction) or the inside (the rear direction) of the vehicle at its portion corresponding to the first joining portion 33a. The joining hole is formed in the convex portion 19a, and the first joining portion 33a is joined to the convex portion 19a. In this way, the support rigidity of the first member 3 by the exterior member 1 is increased.

The two third joining portions 33c on the upper side are joined to both the exterior member 1 and the sensor support member 20 by using a combination of a joining protrusion and a joining hole. Specifically, each of the two third joining portions 33c on the upper side has a joining protrusion protruding from the rear surface of a first vertical portion 38a in the rear direction of the vehicle. These illustrated joining protrusions have a plus-shaped (+) cross-section. The exterior member 1 has first joining holes penetrating the exterior member 1 in the vehicle front-rear direction at its 1ocations corresponding to third joining portions 33c, and the sensor support member 20 has second joining holes penetrating the sensor support member 20 in the vehicle front-rear direction at its locations corresponding to third joining portions 33c. By inserting the joining protrusions into the first and second joining holes from the front of the vehicle, each of the two third joining portions 33c on the upper side is joined to both the exterior member 1 and the sensor support member 20.

The second joining portion 33b and the two third joining portions 33c on the lower side are joined to both the exterior member 1 and the sensor support member 20 by bolts. Specifically, the second joining portion 33b has a boss that protrudes from the rear surface of the emblem support part 36 in the rear direction of the vehicle, and has a screw hole. Each of the two third joining portions 33c on the lower side has a boss that protrudes from the rear surface of the first vertical portion 38a in the rear direction of the vehicle, and has a screw hole. The exterior member 1 has boss holes into which the bosses are inserted at locations corresponding to these three bosses. The sensor support member 20 has bolt holes into which bolts are inserted at its locations corresponding to these three bosses. By screwing bolts into the screw holes of the bosses through the bolt holes from the rear of the vehicle, the second joining portion 33b and each of the two third joining portions 33c on the lower side are joined to both the exterior member 1 and the sensor support member 20. In the illustrated example, the exterior member 1 has a convex portion 19b (see Figure 5) having a convex ridge facing the outside (the front direction) or the inside (the rear direction) of the vehicle at its portion corresponding to the second joining portion 33b. A boss hole is formed in the convex portion 19a, and the second joining portion 33b is joined to the convex portion 19b. In this way, the support rigidity of the first member 3 by the exterior member 1 is increased.

As described above, since the second joining portion 33b is joined not only to the exterior member 1 but also to the sensor support member 20 fixed to the vehicle body structure member, the rigidity of the periphery of the second joining portion 33b as well as the rigidity of each overlapping portion 3a are increased. As a result, rattling of the second members 4 can be reduced more reliably by the overlapping portions 3a. In addition, since the two third joining portions 33c on the upper side and the two third joining portions 33c on the lower side are joined not only to the exterior member 1 but also to the sensor support member 20, the rigidity of the periphery of each third joining portion 33c is increased. As a result, displacement of the detection wave passage portion 35 can be reduced more reliably.

In the present embodiment, in a plan view as viewed from the front or rear of the vehicle, a line virtually connecting the first joining portion 33a and the two third joining portions 33c on the upper side forms a first virtual triangle E, which is convex upward. Furthermore, a line virtually connecting the second joining portion 33b and the two third joining portions 33c on the lower side forms a second virtual triangle F. In a plan view as viewed from the front or rear of the vehicle, the central part of the second virtual triangle F is located approximately at the central part of the detection wave passage portion 35. According to this arrangement, the support rigidity of the detection wave passage portion 35 by the exterior member 1 and the sensor support member 20 can be effectively increased, and displacement of the detection wave passage portion 35 can be reduced more reliably.

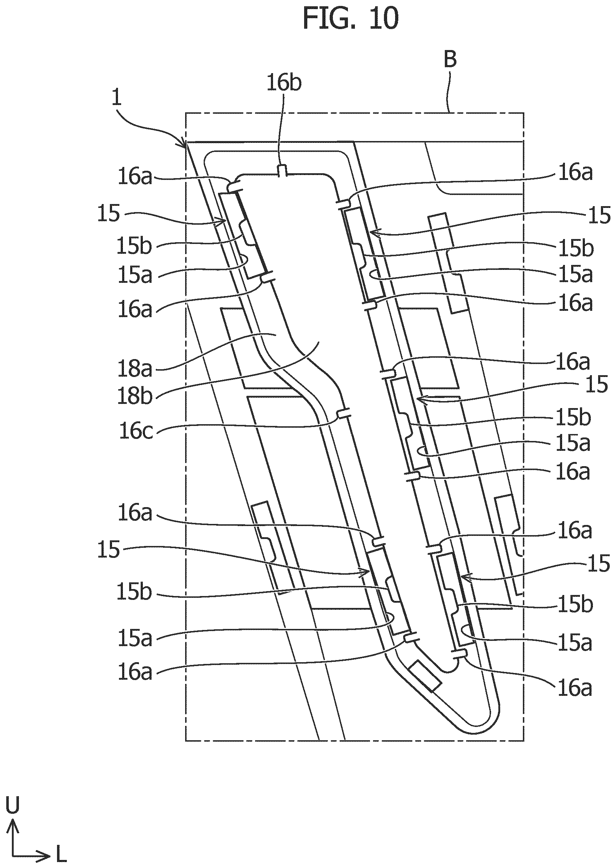

Figure 10 is an enlarged view of a region B including third locking portions 15 in Figure 3. As illustrated in Figure 10, in the present embodiment, each third locking portion 15 of the exterior member 1 is provided with restriction ribs 16a, which come into contact with their respective third locked portions 51 (not illustrated) of its corresponding third member 5 and reduce rattling of its corresponding third member 5. In this way, rattling of the third members 5 disposed at distanced locations from the first member 3 can be reduced.

Specifically, each third locking portion 15 has an insertion hole 15a, which is a vertically elongated hole, and a locking claw 15b is provided at a vertically central portion of a side edge along the peripheral edge of the insertion hole 15a. Furthermore, a pair of restriction ribs 16a protruding in the front direction of the vehicle is provided at the upper edge and the lower edge of the peripheral edge of the insertion hole 15a. The pair of restriction ribs 16a are individually formed to come into contact with the upper end and the lower end of its corresponding third locked portion 51, which has been inserted into the insertion hole 15a, without any space (so-called zero clearance). In the illustrated example, the exterior member 1 has a concave portion 18a, which is concave in the rear direction of the vehicle and into which the peripheral wall of the third member 5 is fitted, and the insertion holes 15a are provided in the concave portion 18a. Each restriction rib 16a protrudes in the vehicle-width direction from the peripheral edge of a convex portion 18b, which is surrounded by the concave portion 18a and bulges in the front direction of the vehicle.

The exterior member 1 also includes restriction ribs 16a at each first locking portion 13 and each second locking portion 14. Thus, rattling of the second members 4 is reduced not only by the overlapping portions 3a, but also by the restriction ribs 16a.

Furthermore, the exterior member 1 has an upper-side restriction rib 16b and an outer-side restriction rib 16c for reducing rattling of its corresponding third member 5 with respect to the exterior member 1 at its locations to which the corresponding third member 5 is attached. The upper-side restriction rib 16b protrudes upward from the upper edge of the convex portion 18b, and comes into contact with the peripheral wall of the third member 5 inserted into the concave portion 18a from below. In this way, downward rattling of the third member 5 is reduced. The outer-side restriction rib 16c protrudes outwardly in the vehicle-width direction from the outer edge of the convex portion 18b in the vehicle-width direction, and comes into contact with the peripheral wall of the third member 5 inserted into the concave portion 18a from the inner side in the vehicle-width direction. In this way, rattling of the third member 5 toward the inner side in the vehicle-width direction is reduced.

The exterior member 1 also includes upper-side restriction ribs 16b and outer-side restriction ribs 16c at its locations to which the second members 4 are attached. Thus, rattling of the second members 4 downward and inward in the vehicle-width direction is further reduced by these restriction ribs 16b and 16c.

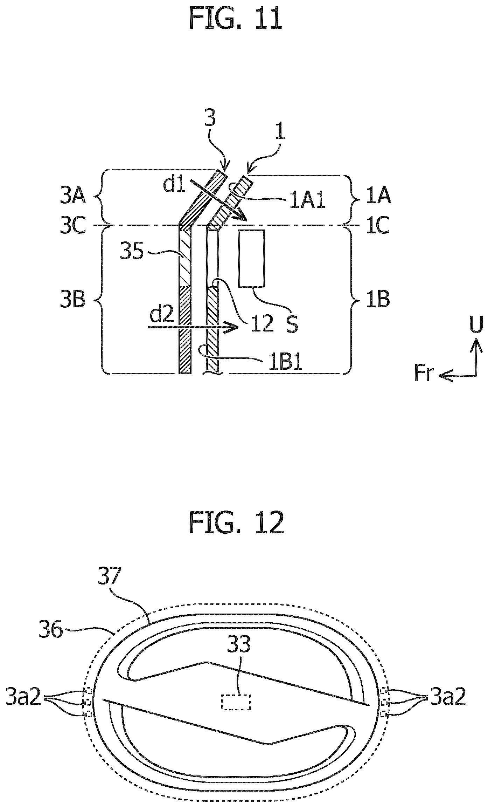

Figure 11 is a vertical sectional view viewed from the left side, schematically illustrating the exterior member 1 and the first member 3. Figure 11 illustrates only the upper part of the exterior member 1, the upper part to which the first member 3 is attached, and the lower part of the exterior member 1 is not illustrated. As illustrated in Figure 11, in the present embodiment, the exterior member 1 has, in the direction of the first member 3, a first support wall surface 1A1 and a second support wall surface 1B1 extending in their respective directions crossing each other, and the first member 3 is supported by the first support wall surface 1A1 and the second support wall surface 1B1.

Specifically, the exterior member 1 has a first wall portion 1A and a second wall portion 1B that extend in their respective directions crossing each other in a side view as viewed from one side in the vehicle-width direction. The second wall portion 1B is a middle part of the entire exterior member 1 in the vertical direction, and includes the sensor opening 12. The first wall portion 1A is a part of the exterior member 1, the part being located above the second wall 1B, and is adjacent to the upper side of the second wall portion 1B. The exterior member 1 is bent in the rear direction of the vehicle along a boundary 1C extending in the vehicle-width direction between the first wall portion 1A and the second wall portion 1B such that the first wall portion 1A is inclined in the rear direction of the vehicle as the first wall portion 1A extends upward. The front wall surface (front surface) of the first wall portion 1A is the first support wall surface 1A1, and the front wall surface (front surface) of the second wall portion 1B is the second support wall surface 1B1. The second support wall surface 1B1 extends in a direction approximately parallel to the vertical direction, and the first support wall surface 1A1 extends diagonally with respect to the vertical direction.

The first member 3 is disposed over the first support wall surface 1A1 and the second support wall surface 1B1, and has a first supported portion 3A and a second supported portion 3B that correspond to the first support wall surface 1A1 and the second support wall surface 1B1, respectively (that is, overlapping the first support wall surface 1A1 and the second support wall surface 1B1, respectively). The first member 3 is bent in the rear direction of the vehicle along a boundary 3C extending in the vehicle-width direction between the first supported portion 3A and the second supported portion 3B such that the first supported portion 3A is inclined in the rear direction of the vehicle as the first supported portion 3A extends upward. In side view, the first supported portion 3A extends in the same direction as the first support wall surface 1A1, and the second supported portion 3B extends in the same direction as the second support wall surface 1B1.

According to this structure, displacement of the first member 3 is restricted in a direction in which the first member 3 overlaps the first support wall surface 1A1 (in other words, the thickness direction of the first wall portion 1A: see arrow d1 in Figure 11 for details). Furthermore, displacement of the first member 3 is restricted in a direction in which the first member 3 overlaps the second support wall surface 1B1 (in other words, the thickness direction of the second wall portion 1B: see arrow d2 in Figure 11 for details). In this way, displacement of the first member 3 in the two directions (specifically, the vertical direction and the vehicle front-rear direction) is restricted by the first support wall surface 1A1 and the second support wall surface 1B1. In other words, the first member 3 is constrained by two surfaces (1A1, 1B1) extending in different directions. As a result, displacement of the first member 3 caused by application of external force generated by, for example, vibrations of the vehicle during running or a light collision of the vehicle can be reduced, and thus, the sensing accuracy of the sensor device S can be maintained.

The detection wave passage portion 35 is disposed at a location close to the boundary 3C between the first supported portion 3A and the second supported portion 3B in the vertical direction. Specifically, the detection wave passage portion 35 is disposed in the second supported portion 3B at a location adjacent to or close to the boundary 3C in the vertical direction. By disposing the detection wave passage portion 35 in this way, the support rigidity of the detection wave passage portion 35 by the first support wall surface 1A1 and the second support wall surface 1B 1 is increased. As a result, displacement of the detection wave passage portion 35 can be reduced more reliably, and the accuracy of the sensor device S can be maintained more reliably.

As illustrated in Figures 2 and 3, in the present embodiment, the exterior member 1 has convex portions 17 protruding in the front direction of the vehicle, and the first member 3 has concave portions 39 into which the convex portions 17 are inserted from the rear of the vehicle and fitted in the vehicle front-rear direction. According to this structure, displacement of the first member 3 in the vehicle-width direction and the vertical direction with respect to the exterior member 1 is restricted by the convex portions 17 and the concave portions 39 that are fitted to each other in the vehicle front-rear direction. In this way, displacement of the first member 3 caused by application of external force generated by, for example, vibration of the vehicle during running or after a light collision of the vehicle can be reduced, and thus, rattling of the second members 4 can be reduced more reliably.

It is preferable that the convex portions 17 and the concave portions 39 be formed around the detection wave passage portion 35. In the illustrated examples, the concave portions 39 are formed at the lower horizontal portion 38d extending along the lower edge of the detection wave passage portion 35, and the convex portions 17 are formed at locations of the exterior member 1, the locations corresponding to the concave portions 39. By disposing the convex portions 17 and the concave portions 39 as described above, in particular, displacement of the detection wave passage portion 35 in the vehicle-width direction and the vertical direction can be effectively reduced. As a result, the sensing accuracy of the sensor device S can be maintained.

The first member 3 may have convex portions protruding in the rear direction of the vehicle, and the exterior member 1 may have concave portions into which the convex portions are inserted from the front of the vehicle and fitted in the vehicle front-rear direction. In other words, convex portion protruding in the in-out direction of the vehicle may be formed at one of a location of the exterior member 1 around the detection wave passage portion 35 and a location of the first member 3 corresponding to the location around the detection wave passage portion 35, and concave portion in which the convex portion is fitted in the in-out direction of the vehicle is formed at the other of the location of the first member 3 around the detection wave passage portion 35 and the location of the exterior member 1 corresponding to the location around the detection wave passage portion 35.

While an embodiment of the present invention has thus been described, the present invention is not limited to the above-described embodiment. Further modifications and variations are possible based on the technical concepts of the present invention.

For example, the shapes of the emblem 37 and the emblem support part 36 described above are merely examples, and the emblem 37 and the emblem support part 36 may have other shapes. Figure 12 illustrates an emblem support part 36 and an emblem 37 according to a modification. The emblem support part 36 and the emblem 37 each have an approximately oval outer shape that is long in the vehicle-width direction in a front view. The emblem support part 36 is provided with at least one joining portion 33. In addition, a plurality of (in this example, three) contact portions 3a2 are provided on the back side of each end portion of the emblem support part 36 in the vehicle-width direction.

In the embodiment described above, the second members 4 are decorative members. However, the specific structure of the second members 4 is not limited thereto. The second members 4 may be a different type of members, which are attached to the exterior member 1 by locking. For example, a second member 4 may be a sensor cover that has the detection wave passage portion 35 and is attached to the exterior member 1 only by locking. In this case, a member disposed around the sensor cover and joined to the exterior member 1 is used as a first member. In order to ensure uniform transmittance for the detection waves, it may be difficult to form, on some sensor covers, a seating surface for a fastening member, such as a bolt. The present invention can be suitably applied to these sensor covers.

The second members 4 may be members attached to the exterior member 1 by joining and locking. For example, a member having a fragile part with low rigidity between a joining portion and a locking part is easily displaced with respect to the exterior member 1. The present invention can be suitably applied to this member.

In the embodiment described above, the first member 3 has the protruding edge portions 3a1, and the contact portions 3a2 are provided on the protruding edge portions 3a1. However, the first member 3 may be constructed without the protruding edge portions 3a1. For example, since a portion of the emblem support part 36, the portion being covered with the emblem 37, does not affect the aesthetic appearance of the design member 2 even if a sink mark is formed, the contact portions 3a2 may be provided in this portion.

In the embodiment described above, the entire front wall 41 of each second member 4 constitutes an inclined wall 44. However, the specific structure of the inclined wall 44 is not limited to this example. For example, the inclined wall 44 may be formed only on a portion of the second member 4, the portion including a region with which the contact portions 3a2 come into contact.

In the embodiment described above, each contact portion 3a2 is constructed to come into contact with the inclined part 44 of its corresponding second member 4. However, the contact portions 3a2 may each be constructed to come into contact with a wall other than the inclined walls 44. For example, each second member 4 may have a perpendicular wall perpendicular to the locking direction C, and each contact portion 3a2 may be constructed to come into contact with its corresponding perpendicular wall. According to this structure, rattling of the second members 4 in the locking direction C can be reduced.

In the embodiment described above, the exterior structure 10 disposed on the front section of the vehicle has been described. However, the section to which the exterior structure 10 is applied is not limited to the front section of the vehicle. The exterior structure 10 may be another section of the vehicle. For example, the exterior structure 10 may be disposed on the rear section or a side section of the vehicle. When the exterior structure 10 is disposed on the rear section of the vehicle, the "outside of the vehicle" and the "outer direction of the vehicle" according to the present invention correspond to the rear side of the vehicle and the rear direction of the vehicle, respectively. When the exterior structure 10 is disposed on a side section of the vehicle, the "outside of the vehicle" and the "outer direction of the vehicle" according to the present invention correspond to the outer side (the left side or the right side) along the vehicle-width direction and the outer direction (the left direction or the right direction) along the vehicle-width direction, respectively.

### [Reference Signs List]

- 1: Exterior member
- 11: Plate support part
- 12: Sensor opening
- 13: First locking portion
- 13a: Insertion hole
- 13b: Locking claw
- 14: Second locking portion
- 14a: Insertion hole
- 14b: Locking claw
- 15: Third locking portion
- 15a: Insertion hold
- 15b: Locking claw
- 16a: Restriction rib
- 16b: Upper-side restriction rib
- 16c: Outer-side restriction rib
- 17: Convex portion
- 18a: Concave portion
- 18b: Convex portion
- 19a, 19b: Convex portion
- 1A: First wall portion
- 1A1: First support wall surface
- 1B: Second wall portion
- 1B1: Second support wall surface
- 1C: Boundary
- 2: Design member
- 3: First member
- 31: Front wall
- 32: Peripheral wall
- 33a: First joining portion
- 33b: Second joining portion
- 33c: Third joining portion
- 34: First locked portion
- 35: Detection wave passage portion
- 36: Emblem support part
- 36a: Main portion (first portion)
- 37: Emblem
- 38a: First vertical portion (second portion)
- 38b: Second vertical portion
- 38c: Upper horizontal portion
- 38d: Lower horizontal portion
- 39: Concave portion
- 3a: Overlapping portion
- 3a1: Protruding edge portion
- 3a2: Contact portion (overlapping-portion-side contact portion)
- 3b: Non-overlapping portion
- 3A: First supported portion
- 3B: Second supported portion
- 3C: Boundary
- 4: Second member
- 41: Front wall
- 42: Peripheral wall
- 43: Second locked portion (locked portion)
- 44: Inclined wall
- 44a: First inclined portion
- 44b: Second inclined portion
- 4a1: Contact portion (second-member-side contact portion)
- 5: Third member
- 51: Third locked portion
- 6: Cover member
- 7: Bracket
- 10: Exterior structure
- 20: Sensor support member
- C: Locking direction
- D: Perpendicular direction
- E: Virtual triangle
- F: Virtual triangle
- S: Sensor device

## Claims

1. A vehicle exterior structure comprising:
an exterior member that is disposed to face an outside of the vehicle; and
a design member that is attached to the exterior member on an outside of the vehicle, the vehicle exterior structure being **characterized in that**
the design member includes:
a first member that is joined to the exterior member from the outside of the vehicle, and
a second member that is locked to the exterior member from the outside of the vehicle, and
wherein the first member has an overlapping portion that is disposed to overlap with a portion of the second member from the outside of the vehicle.

2. The vehicle exterior structure according to claim 1, wherein the overlapping portion includes an overlapping-portion-side contact portion that protrudes toward the second member and comes into contact with the second member.

3. The vehicle exterior structure according to claim 1 or 2, wherein the portion of the second member includes a second-member-side contact portion that protrudes toward the first member and comes into contact with the first member.

4. The vehicle exterior structure according to claim 2 or 3 when dependent on claim 2,
wherein the first member is a resin molded product,
wherein the overlapping portion has a protruding edge portion that is provided along a peripheral edge of the overlapping portion and protrudes toward the second member, and
wherein the overlapping-portion-side contact portion is provided on the protruding edge portion.

5. The vehicle exterior structure according to any of claims 2 to 4 when dependent on claim 2,
wherein at least the portion of the second member has an inclined wall that is inclined with respect to a perpendicular direction perpendicular to a direction in which the second member is locked to the exterior member, and
wherein the overlapping-portion-side contact portion comes into contact with the inclined wall.

6. The vehicle exterior structure according to claim 5, wherein the inclined wall is formed in a mountain shape with a convex ridge facing the outside of the vehicle.

7. The vehicle exterior structure according to any of claims 2 to 6 when dependent on claim 2,
wherein the exterior member extends in a vertical direction and a width direction perpendicular to the vertical direction, and
wherein the second member has a plurality of locked portions that are arranged on both sides of the overlapping-portion-side contact portion in at least one of a vertical direction and a width direction and are individually locked to the exterior member.

8. The vehicle exterior structure according to any of claims 1 to 7,
wherein the first member is joined to the exterior member at a non-overlapping portion that does not overlap with the second member, and
wherein the overlapping portion extends from the non-overlapping portion toward the second member.

9. The vehicle exterior structure according to any of claims 1 to 8,
wherein the first member includes a non-overlapping portion that does not overlap with the second member,
wherein the non-overlapping portion includes a detection wave passage portion that allows a detection wave sensed by a sensor device to pass through the detection wave passage portion, and
wherein the non-overlapping portion is joined to at least one of the exterior member and a sensor support member that supports the sensor device, around the detection wave passage portion.

10. The vehicle exterior structure according to claim 8 or 9,
wherein the non-overlapping portion includes:
a first portion that is joined to the exterior member; and
a second portion that is arranged to be spaced apart from the first portion and is locked or joined to the exterior member,
wherein the second member is disposed between the first portion and the second portion, and
wherein the overlapping portion extends from the first portion toward the second member.
